# EUROPEAN PATENT APPLICATION

(11) **EP 4 693 090 A1**
(43) Date of publication of application: **11.02.2026**
(21) Application number: 25190383.7
(22) Date of filing: 18.07.2025
(51) Int. Cl.: G06F 30/20, A43B 13/04, B33Y 50/00, B33Y 80/00, A43B 13/18, A43B 23/02, A43B 13/14, G06F 111/06, G06F 113/10

(54) **TOPOLOGY OPTIMIZED 3D PRINTED STRUCTURES FOR FOOTWEAR**

(30) Priority: 05.08.2024 US 202418794754
(71) Applicant: adidas AG, 91074 Herzogenaurach (DE)
(72) Inventor: LUTHER, Derek Andrew, Portland, OR, 97217 (US); DELGADO, Christian Manuel Arias, Portland, OR, 97217 (US)
(74) Representative: Bardehle Pagenberg Partnerschaft mbB Patentanwälte Rechtsanwälte

(57) **Abstract**

Methods for 3D printing footwear components comprising a topology optimized structure populated with an interconnected lattice of unit cells. Topology optimization and populating of interconnected unit cells creates footwear components comprising a unit cell lattice structure populated within a topology optimized volume. In some embodiments, the footwear component can comprise a component of a sole for an article of footwear.

## Description

### FIELD

The described embodiments generally relate to additively manufactured (3D printed) articles comprising one or more topology optimized structures. More particularly, described embodiments relate to additively manufactured (3D printed) footwear components comprising one or more topology optimized structures, and methods of making the same.

### BACKGROUND

The human foot is a complex and remarkable piece of machinery, capable of withstanding and dissipating many impact forces. The natural padding of fat at the heel and forefoot, as well as the flexibility of the arch, help to cushion the foot. Although the human foot possesses natural cushioning and rebounding characteristics, the foot alone is incapable of effectively overcoming many of the forces encountered during everyday activity. Unless an individual is wearing shoes that provide proper cushioning and support, the soreness and fatigue associated with every day activity is more acute, and its onset may be accelerated.

Individuals are often concerned with the amount of cushion and support an article of footwear provides. This is true for articles of footwear worn for non-performance activities, such as a leisurely stroll, and for performance activities, such as running, because throughout the course of an average day, the feet and legs of an individual are subjected to substantial impact forces. When an article of footwear contacts a surface, considerable forces may act on the article of footwear and, correspondingly, the wearer's foot. The upper and sole of an article of footwear function, in part, to provide cushioning to the wearer's foot and to protect it from these forces.

Proper footwear should be durable, comfortable, and provide other beneficial characteristics for an individual. Therefore, a continuing need exists for innovations in footwear.

### BRIEF SUMMARY

Embodiments according to present disclosure are directed to methods of making sports equipment (for example, a footwear component) that comprise topology optimization of a design space along with population of the design space with interconnected unit cells in a lattice structure. The methods can be used to make sports equipment comprising interconnected unit cells arranged in a lattice structure and populated within the topology optimized volume.

A first embodiment (1) of the present application is directed to a method for making a footwear component, the method comprising: selecting a design space; performing topology optimization on the design space to create an optimized design space; populating the design space or the optimized design space with a plurality of interconnected unit cells in a lattice structure; and 3D printing the footwear component comprising the plurality of interconnected unit cells in the lattice structure.

In a second embodiment (2), the step of preforming topology optimization according to the first embodiment (1) is performed before the step of populating the design space with the plurality of interconnected unit cells, and populating the design space comprises populating the plurality of interconnected unit cells within the optimized design space.

In a third embodiment (3), the step of preforming topology optimization according to the first embodiment (1) is performed after the step of populating the design space with the plurality of interconnected unit cells, and the optimized design space is created by removing select interconnected unit cells in regions surrounding the optimized design space.

In a fourth embodiment (4), the step of preforming topology optimization according to the first embodiment (1) is performed after the step of populating the design space with the plurality of interconnected unit cells, and the optimized design space is created by modifying select interconnected unit cells in regions surrounding the optimized design space.

In a fifth embodiment (5), modifying select interconnected unit cells according to the fourth embodiment (4) comprises at least one of: reducing a strut thickness of struts defining the select interconnected unit cells, reducing a ribbon thickness of ribbons defining the select interconnected unit cells, changing a material type of the select interconnected unit cells, or changing a unit cell type for the select interconnected unit cells.

In a sixth embodiment (6), the step of performing topology optimization according to any one of embodiments (1) - (5) comprises modeling a set of boundary conditions applied to the design space, and the set of boundary conditions comprises a set of boundary forces applied to the design space or a set of boundary displacements applied to the design space.

In seventh embodiment (7), the set of boundary conditions according to the sixth embodiment (6) comprises a set of boundary conditions for all or a portion of a footwear sole during a gait cycle of an individual or group of individuals.

In an eighth embodiment (8), the method according to any one of embodiments (1) - (7) comprises determining target mechanical properties for different regions of the optimized design space, and populating the plurality of interconnected unit cells based on the target mechanical properties.

In a ninth embodiment (9), the method according to any one of embodiments (1) - (7) comprises determining target mechanical properties for different regions of the optimized design space, and selectively modifying a subset of the plurality of interconnected unit cells populated within the optimized design space based on the target mechanical properties.

In a tenth embodiment (10), selectively modifying the subset of the plurality of interconnected unit cells populated within the optimized design space according to the ninth embodiment (9) comprises at least one of: reducing a strut thickness of struts defining the subset of interconnected unit cells, reducing a ribbon thickness of ribbons defining the subset of interconnected unit cells, changing a material type of the select interconnected unit cells, or changing a unit cell type for the subset of interconnected unit cells.

In an eleventh embodiment (11), 3D printing the footwear component according to any one of embodiments (1) - (10) comprises printing a skin around the optimized design space such that the skin covers the plurality of interconnected unit cells in the optimized design space.

In a twelfth embodiment (12), the skin according to the eleventh embodiment (11) does not comprise interconnected unit cells.

In a thirteenth embodiment (13), the footwear component according to any one of embodiments (1) - (12) comprises a component of a sole for an article of footwear.

In a fourteenth embodiment (14), the footwear component according to any one of embodiments (1) - (12) comprises a heel portion of a sole for an article of footwear.

In a fifteenth embodiment (15), the step of performing topology optimization according to any one of embodiments (1) - (5) or (8) - (12) comprises modeling a set of boundary conditions applied to the design space, and wherein the set of boundary conditions comprises a set of boundary conditions for a footwear upper during a gait cycle of an individual or group of individuals.

In a sixteenth embodiment (16), the footwear component according to the fifteenth embodiment (15) comprises a portion of an upper for an article of footwear.

A seventeenth embodiment (17) of the present application is directed to a footwear component comprising a structure defined by a topology optimized volume and interconnected unit cells arranged in a lattice structure and populated within the topology optimized volume.

In an eighteenth embodiment (18), the footwear component according to the seventeenth embodiment (17) comprises void space occupying regions within the structure not defined by the topology optimized volume, where the void space is devoid of the interconnected unit cells.

In a nineteenth embodiment (19), the structure according to the eighteenth embodiment (18) comprises a plurality of interconnected support members, and each support member comprises a plurality of the interconnected unit cells.

In a twentieth embodiment (20), the void space according to the eighteenth embodiment (18) or the nineteenth embodiment (19) comprises a through channel extending from a medial side of the footwear component to a lateral side of the footwear component, and the through channel comprises an effective diameter larger than an effective diameter of the interconnected unit cells arranged in the lattice structure.

In a twenty-first embodiment (21), the footwear component according to any one of embodiments (17) - (20) comprises a 3D-printed sole component.

### BRIEF DESCRIPTION OF THE DRAWINGS

FIG. 1 shows an exemplary flowchart of a method for making a footwear component according to some embodiments.
FIG. 2 shows a design space according to some embodiments.
FIG. 3 shows a topology optimized design space according to some embodiments.
FIG. 4 shows a populated optimized design space according to some embodiments.
FIG. 5 shows a populated design space according to some embodiments.
FIG. 6 shows a topology optimized and populated space according to some embodiments.
FIG. 7 shows a topology optimized and populated space according to some embodiments.
FIG. 8 shows a topology optimized and populated space with multiple optimized regions according to some embodiments.
FIG. 9 shows a topology optimized and populated space with a skin according to some embodiments.
FIG. 10 shows an article of footwear comprising a footwear component according to some embodiments.
FIGS. 11A and 11B show a property map according to some embodiments.
FIG. 12 shows a footwear component according to some embodiments.

### DETAILED DESCRIPTION

The present invention(s) will now be described in detail with reference to embodiments thereof as illustrated in the accompanying drawings. References to "some embodiments", "one embodiment", "an embodiment", "an exemplary embodiment", etc., indicate that the embodiment described can comprise a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The indefinite articles "a," "an," and "the" include plural referents unless clearly contradicted or the context clearly dictates otherwise.

The term "comprising" is an open-ended transitional phrase. A list of elements following the transitional phrase "comprising" is a non-exclusive list, such that elements in addition to those specifically recited in the list can also be present.

As used herein, unless specified otherwise, references to "first," "second," "third," "fourth," etc. are not intended to denote order, or that an earlier-numbered feature is required for a later-numbered feature. Also, unless specified otherwise, the use of "first," "second," "third," "fourth," etc. does not necessarily mean that the "first," "second," "third," "fourth," etc. features have different properties or values.

As used herein, the term "effective dimeter" is utilized to describe the diameter or size of a feature (for example, a strut, a unit cell, or a channel), but this term should not be interpreted as requiring that the feature have a circular shape or cross-section. Instead, features can comprise non-circular shapes or cross-sections. For example, struts can have non-circular cross-sectional shapes, and in such embodiments the term "effective diameter" is intended to refer to the maximum cross-sectional dimension of the cross-sectional shape. For example, the "effective diameter" of a strut having a square cross-sectional shape would be the diagonal dimension across the square. As another example, the "effective diameter" of a strut having an oval cross-sectional shape would be the length of the oval-shape's major axis. For a feature having an effective diameter that varies along the length of the feature (for example, an hourglass shape), the effective diameter is the smallest effective diameter. The cross-sectional shape of a strut is the shape of the strut in a cross-section perpendicular to the length of the strut between two nodes. The cross-sectional shape of a channel is the shape of the channel in a cross-section perpendicular to the direction of the channel within a footwear component. The effective diameter of a unit cell as described herein is the effective diameter of the largest cross-sectional dimension for the volume of space occupied by the unit cell.

Articles, for example articles of footwear, according to embodiments of the present application comprise a 3D printed component comprising an optimized topology populated with a lattice structure. The optimized topology in combination with the populated lattice structure can be designed to optimize mechanical properties of the component. The optimized topology in combination with the populated lattice structure can create lightweight components that achieve the mechanical properties. For example, the lattice structure populated within the optimized topology can be optimized for different sports, to provide a specific feel for a user, and/or to provide specific performance characteristics for a user. The component can comprise, for example, a component of a sole for an article of footwear, a component of an upper for an article of footwear, or a combination thereof.

The topology optimization and populating methods for making components as described herein allow for multiscale optimization with two scales, macro and micro. The topology optimization can define optimal regions for material layout and the unit cell lattice infill can define local properties within the layout. The multiscale optimization methods descried herein can achieve one or more of: (i) high stiffness to weight ratio properties, (ii) high or low shear stiffness to either allow or stop shear of the component, or (iii) improved energy return and decreased damping.

As used herein, the term "lattice structure" refers to a three-dimensional structure comprising a plurality of unit cells (for example unit cells 450). The lattice structure comprises interconnected structural members (for example struts 452 or ribbons) defining the plurality of unit cells. In embodiments comprising struts, the struts, and thus the unit cells, are connected at the nodes (for example nodes 454). For example, the struts are connected at nodes and define unit cells arranged in a lattice configuration. Each node can connect two or more struts. In some embodiments, the plurality of interconnected unit cells can be arranged in a regular or repeating lattice configuration. Exemplary lattice configurations include, but are not limited to basic cubic lattices, body-centered cubic lattices, face-centered cubic lattices, and modified lattices based on these lattice types. Exemplary lattice configurations include, but are not limited to the lattice structures described in U.S. Publication No. 2022/0110408, published on April 14, 2022 and U.S. Patent Application No. 18/313,135, filed on May 5, 2023, both of which are hereby incorporated by reference in their entireties.

The unit cells can have various dimensions and geometries. Further, the unit cells within a lattice structure can be the same or may differ. Thus, a lattice structure can comprise unit cells of different dimensions or geometries. The three-dimensional shape of a unit cell can be defined by a plurality of interconnected struts connected to one another at nodes. In such embodiments, each unit cell can have a base geometry defined by the struts. As used herein, "base geometry" means the base three-dimensional shape, connection, and arrangement of the struts defining a unit cell. A base geometry is the three dimensional shape of a unit cell in an unwarped and unmodified state (e.g., when the unit cell is not deformed by loading, conformed to a specific shape, or modified as described herein). The base geometry of a unit cell may be, but is not limited to, a dodecahedron (e.g., rhombic), a tetrahedron, an icosahedron, a cube, a cuboid, a prism, or a parallelepiped. As used herein, "base strut geometry" means the base three-dimensional shape, connection, and arrangement of the struts and nodes defining the base geometry for a full unit cell. As used herein, "base surface geometry" means the base three-dimensional shape of a body formed by one or more ribbons of material that define a solid representation of an implicit surface for a full unit cell.

In some embodiments, the interconnected unit cells can comprise a solid representation of a repeating implicit surface of a lattice structure. In such embodiments, the unit cells can comprise a "base surface geometry" defined by the base three-dimensional shape of a body formed by one or more ribbons (walls) of material that define a solid representation of an implicit surface for a full unit cell. In some embodiments, the implicit surface can be a periodic implicit surface such that the base surface geometry of each unit cell contacts the base surface geometry of at least some adjacent unit cells to create a lattice. One example of a suitable periodic surface is a gyroid, but any type of suitable periodic surface can be used.

Herein, a solid representation of an implicit surface refers to a solid object following the shape of an implicit surface. Whereas an actual implicit surface has no thickness, a solid representation of an implicit surface has a thickness on one or both sides of the actual implicit surface in a three dimensional space. The thickness gives the solid representation volume, meaning the solid representation can be built as a physical object from physical material. The added thickness or thicknesses can be uniform, or at least approximately uniform notwithstanding fillets or local deformities, and thin in comparison to the overall size of the represented implicit surface. In some embodiments, the relative density of a unit cell of the solid representation can be from 5% to 30%, from 5% to 40%, from 10% to 25%, or from 15% to 20%. The term "relative density" as used herein refers to an amount of a unit cell occupied by solid material as a percentage of a total volume of the unit cell.

In some embodiments, the implicit surfaces can be created using a combination of random Fourier series functions, in which linear and/or nonlinear coefficients as well as linear and/or nonlinear variables inside sinuous and cosine terms over the x, y and z space are iterated to generate the functions. The resulting unit cells can have different planes of symmetry, such as, in various examples, zero planes of symmetry, one plane of symmetry, or more than one plane of symmetry. The function can be derived in a way that satisfies the periodicity of the unit cell. Criteria for the selection of an applicable implicit surface within the design space domain can include any one or any combination of number of terms in the equation, number of connected components, the edge boundary length, surface area, and volume fraction.

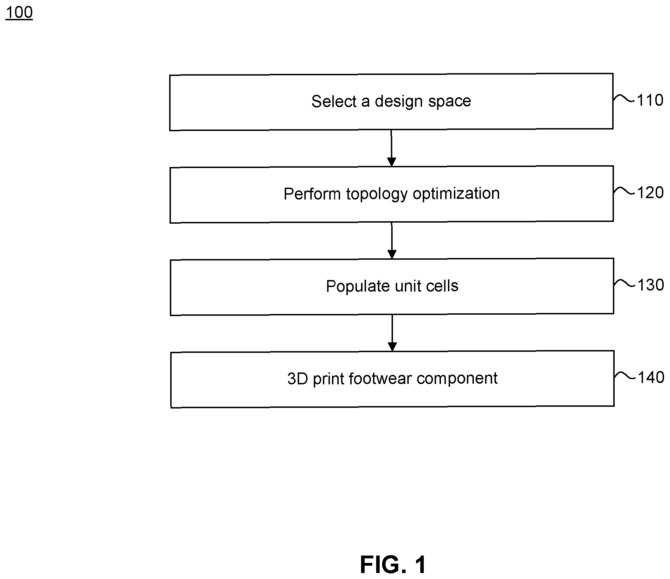

FIG. 1 shows a method 100 for making a component according to some embodiments. In some embodiments, method 100 can be used to make a footwear component, for example a sole component for an article of footwear, an upper component for an article of footwear, or a combination thereof. In some embodiments, the footwear component can comprise a heel portion of a sole for an article of footwear. In some embodiments, the footwear component can comprise a forefoot portion of a sole for an article of footwear.

Unless stated otherwise, the steps of method 100 need not be performed in the order set forth herein. Additionally, unless specified otherwise, the steps of method 100 need not be performed sequentially. The steps can be performed in a different order or simultaneously. For example, step 130 can be performed before step 120, or vice versa.

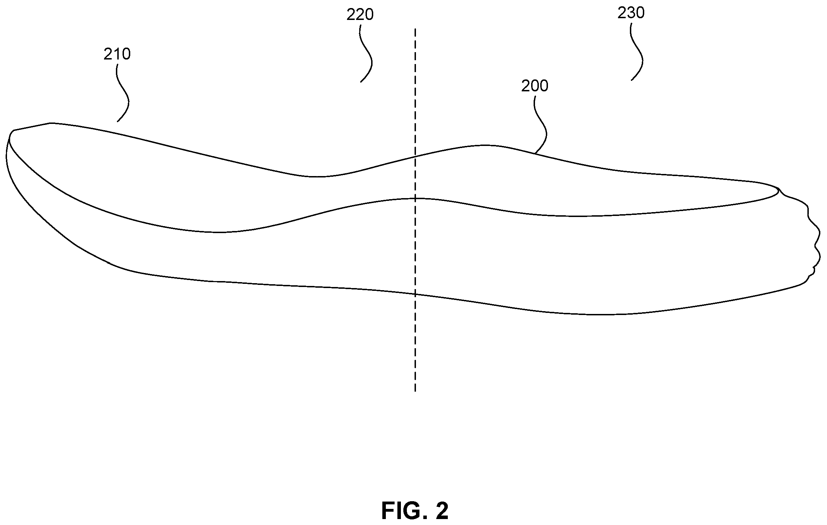

In step 110, method 100 comprises selecting a design space for the component. The design space selected in step 110 can also be referred to as a design volume. The design space fully confines the dimensional boundary of the component to be made. An exemplary design space 200 for a footwear sole is shown in FIG. 2.

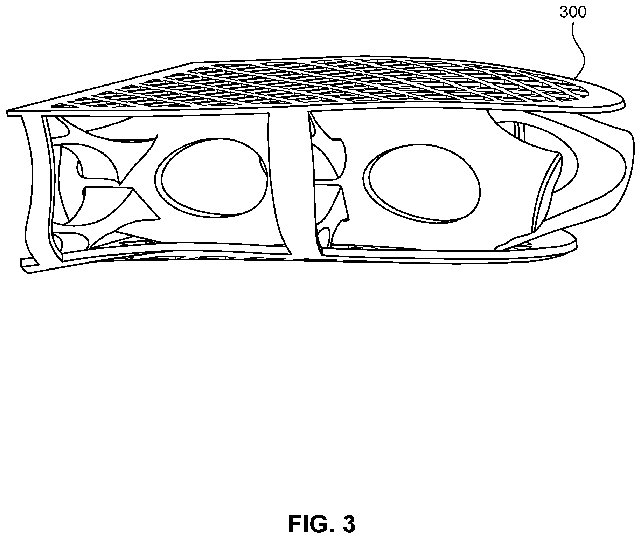

Design space 200 comprises an overall space or volume corresponding to the overall volume of a sole for an article of footwear. Design space 200 can comprise a forefoot portion 210, a midfoot portion 220, and a rearfoot portion 230. Portions 210, 220, and 230 are not intended to demarcate precise areas of design space 200. Rather, portions 210, 220, and 230 are intended to represent general areas of a footwear sole that provide a frame of reference. In some embodiments, design space 200 can comprise forefoot portion 210, midfoot portion 220, and rearfoot portion 230. In some embodiments, design space 200 can comprise all or a portion of forefoot portion 210, all or a portion of midfoot portion 220, all or a portion of rearfoot portion 230, or any combination thereof. A design space comprising forefoot portion 210 and a section of midfoot portion 220 can be a design space a forefoot portion of a sole for an article of footwear. A design space comprising rearfoot portion 230 and a section of midfoot portion 220 can be a design space a heel portion of a sole for an article of footwear. As a non-limiting example, a design space 200 that comprises rearfoot portion 230 and a section of midfoot portion 220 can be selected for the topology optimized design space 300 shown in FIG. 3.

In step 120, topology optimization is performed on the selected design space to create an optimized design space. FIG. 3 shows an exemplary optimized design space 300 for a footwear sole component according to some embodiments.

The topology optimization performed in step 120 comprises applying one or more algorithmic models to the design space to spatially optimize the distribution of material within the design space for a given set of loads, conditions, and performance constraints. The topology optimization can comprise an optimization method that uses algorithmic models to optimize material layout within the design space for a given set of mechanical loads, forces, displacements, etc. (each a "boundary condition" and collectively called "boundary conditions"). The topology optimization develops optimized material layout and structures within the design space by considering one or more boundary conditions, the available design space, and materials. In some embodiments, the topology optimization can factor in material and/or manufacturing costs. Suitable topology optimization methods comprise a density-based optimization method, an evolutionary structural optimization method, and a level-set optimization method. In some embodiments, the topology optimization can comprise finite element analysis to optimize material layout and structures within the design space for a given set of boundary conditions. The topology optimization can be performed using topology optimization software, for example OPTISTRUCT^{®} software available from ALTAIR^{®}. In some embodiments, the topology optimization can further comprise shape and/or size optimization of the topology optimized structures.

Performing topology optimization in step 120 can comprise modeling a set of boundary conditions applied to the design space 200. The set of boundary conditions can comprise a set of boundary loads applied to the design space, a set of boundary forces applied to the design space, a set of boundary displacements applied to the design space, or a combination thereof. In some embodiments, the set of boundary conditions can comprise a set of boundary conditions for all or a portion of a footwear sole during a gait cycle of an individual or a group of individuals. In some embodiments, the set of boundary conditions can comprise a set of boundary conditions for all or a portion of a footwear upper during a gait cycle of an individual or a group of individuals. A group individuals can be characterized by one or more physiological characteristics, such as a heel striker, a mid foot striker, a forefoot striker, a pronator, supinator, a neutral individual, shoe size, height, weight, or a combination thereof.

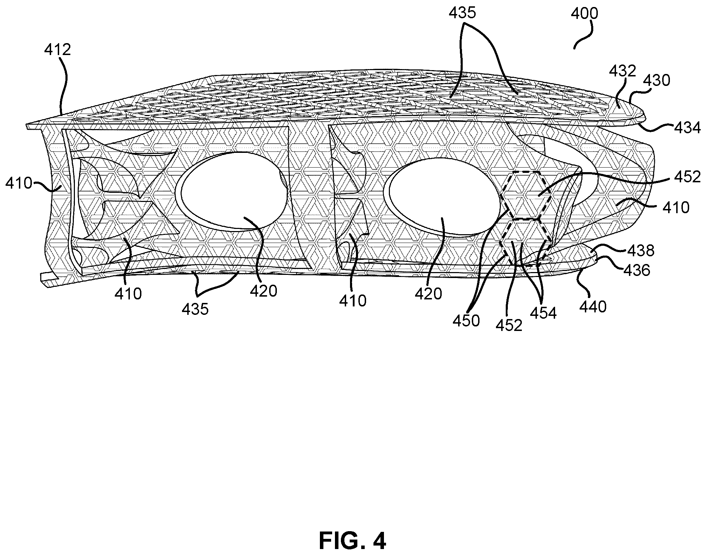

In step 130, unit cells are populated such that the unit cells are interconnected in a lattice structure. In some embodiments, unit cells can be populated into the design space 200. In some embodiments, the unit cells can be populated into optimized design space 300. In any event, one or more unit cell types can be populated, and in some cases modified, as described herein. An exemplary populated optimized design space 400 is shown in FIG. 4.

Populated optimized design space 400 comprises a plurality of topology optimized structures 410 populated with unit cells. Non-topology optimized space 420 surrounds the populated optimized design space 400. As discussed herein, non-topology optimized space 420 can comprise either void space 490 or secondary unit cells 492. A peripheral boundary 412 of the topology optimized structures 410 bounds the topology populated optimized design space 400 and demarcates populated optimized design space 400 from non-topology optimized space 420. In some embodiments, all or a portion of peripheral boundary 412 can be coved with a skin 480 as described herein.

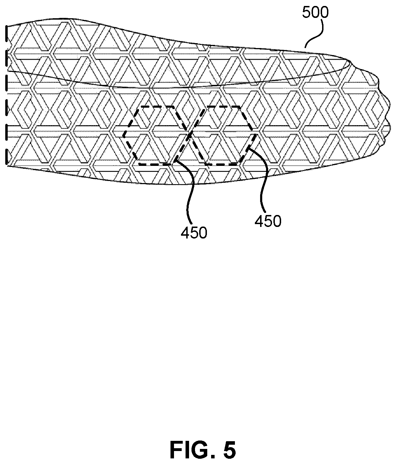

In embodiments where interconnected unit cells are populated within the design space 200, the entire design space 200 can be populated with one or more unit cell types before topology optimization. In such embodiments, the step of preforming topology optimization (step 120) is performed after the step of populating the design space with the plurality of interconnected unit cells (step 130). FIG. 5 illustrates a non-topology optimized design space 500 populated with unit cells 450 according to some embodiments. After populating non-topology optimized design space 500, topology optimization can be performed to arrive a populated optimized design space, for example populated optimized design space 400 shown in FIG. 4. In some embodiments, the optimized design space 400 can be created by removing select interconnected unit cells in regions surrounding the optimized design space 400 to create non-topology optimized space 420 in the form of void space 490. In some embodiments, the optimized design space 400 can be created by modifying select interconnected unit cells in regions surrounding the optimized design space 400 to create non-topology optimized space 420 in the form of secondary unit cells 492.

In embodiments where interconnected unit cells are populated within optimized design space 300, the unit cells are populated into the optimized design space 300. In such embodiments, the step of preforming topology optimization (step 120) is performed before the step of populating the design space with the plurality of interconnected unit cells (step 130). In some embodiments, interconnected unit cells can be populated only within optimized design space 300 to create non-topology optimized space 420 in the form of void space 490. In some embodiments, a first type of interconnected unit cells 450 can be populated within optimized design space 300 and a second type of interconnected unit cells 492 can be populated in the non-topology optimized space 420. In some embodiments, the second type of interconnected unit cells 492 populated in the non-topology optimized space 420 can be a modified version of the first type.

In some embodiments, unit cells can be populated into design space 200 or optimized design space 300 by discretizing the space 200 or 300 into a matrix of lattice cells and populating those lattice cells with interconnected unit cells. For example, in some embodiments, space 200 or 300 can be discretized into a matrix of cubic or tetrahedral lattice cells that are then populated with interconnected unit cells. In some embodiments, a single unit cell can be populated into a respective lattice cell. In some embodiments, multiple unit cells can be populated into a respective lattice cell.

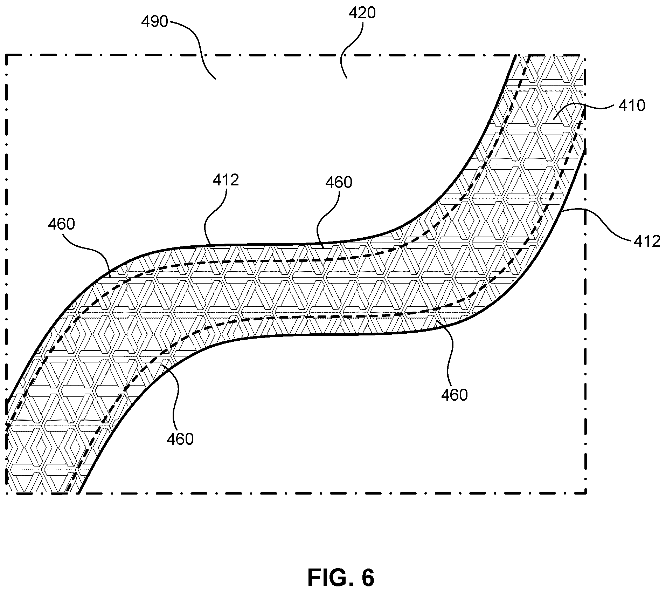

In some embodiments, method 100 can comprise modifying unit cells 450 boarding peripheral boundary 412 of populated optimized design space 400 to conform the shape of the unit cells 450 located at the boundary 412 to the shape of the peripheral boundary 412. In some embodiments, this modification can be performed as part of step 120. In some embodiments, this modification can be performed as part of step 130. In such embodiments, topology optimized structures 410 can comprise a plurality of modified peripheral unit cells 460 at peripheral boundary 412, as shown for example in FIG. 6.

In some embodiments, modifying unit cells 450 at boundary 412 can comprise warping peripheral unit cells 460 to conform the shape of the unit cells 460 to the shape of boundary 412. In such embodiments, the base geometry of the unit cells 460 can be warped to confirm to the shape of boundary 412 resulting in a unit cell comprising a geometry warped relative the unit cells' base geometry in one or more directions. A warped unit cell comprising struts comprises the same connection and arrangement of struts and nodes defining the base strut geometry for the unit cell, but the shape of the unit cell is warped in one or more directions relative to the unit cell's base geometry. Similarly, a warped implicit surface unit cell comprises the same ribbons of material that define a solid representation for the cell's base surface geometry, but the shape of the unit cell is warped in one or more directions relative to the unit cell's base geometry.

In some embodiments, warping the peripheral unit cells 460 can comprise wrapping the discretizing lattice cells into which the peripheral unit cells 460 are populated. In some embodiments, warping the peripheral unit cells 460 to conform to the shape of boundary 412 can comprise edge length optimization of the discretizing lattice cells, angle and orientation optimization of the discretizing lattice cells, or both.

In some embodiments, modifying unit cells 450 at boundary 412 can comprise removing a portion of individual peripheral unit cells 460 to conform the shape of the unit cells 460 to the shape of boundary 412. For peripheral unit cells 460 comprising struts, removing a portion of individual peripheral unit cells 460 can comprise removing all or a portion of one or more struts, removing all or a portion of one or more nodes, or a combination thereof. For implicit surface peripheral unit cells 460, removing a portion of individual peripheral unit cells 460 can comprise removing all or a portion of one or more ribbons defining the solid representation of the implicit surface. Removing a portion of individual peripheral unit cells 460 results in peripheral unit cells 460 being partial unit cells located at boundary 412. As used herein, a "partial unit cell" is a unit cell comprising an incomplete version of the full "base geometry" for a unit cell neighboring the partial unit cell. In other words, a "partial unit cell" is an incomplete unit cell missing a portion of its full base geometry.

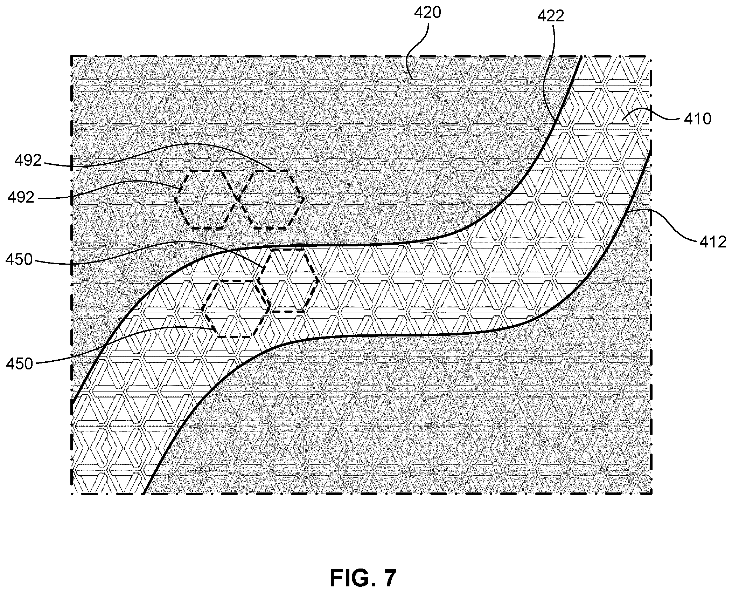

In some embodiments, method 100 can comprise modifying select unit cells 450 surrounding peripheral boundary 412 of populated optimized design space 400 to create secondary unit cells 492 within non-topology optimized space 420, as shown for example in FIG. 7. In some embodiments, this modification can be performed as part of step 120. In some embodiments, this modification can be performed as part of step 130.

Modifying select interconnected unit cells 450 to create secondary unit cells 492 can comprise at least one of: reducing a strut thickness of struts defining the select interconnected unit cells 450, reducing a ribbon thickness of ribbons defining the select interconnected unit cells 450, changing a material type of the select interconnected unit cells 450, or changing a unit cell type for the select interconnected unit cells 450. In any case, at least one of these characteristics is modified relative to the unit cells 450 in optimized design space 400 to create the secondary unit cells 492 within non-topology optimized space 420. In some embodiments, the modification of select unit cells 450 to create secondary unit cells 492 can comprise weakening the strength of the select unit cells by reducing a strut thickness, reducing a ribbon thickness, changing a material type to a material comprising a lower compressive strength, or changing the unit cell type to a secondary unit cell 492 weaker under a compressive force.

Reducing the strut thickness can comprise reducing the effective diameter of struts defining the secondary unit cells 492 within non-topology optimized space 420 relative to the effective diameter of struts defining unit cells 450 within optimized design space 400. In some embodiments, the effective diameter of struts defining the secondary unit cells 492 can be at least 10% less than the effective diameter of struts defining unit cells 450 within optimized design space 400. In some embodiments, the effective diameter of struts defining the secondary unit cells 492 can be at least 25% less than the effective diameter of struts defining unit cells 450 within optimized design space 400. In some embodiments, the effective diameter of struts defining the secondary unit cells 492 can be at least 50% less than the effective diameter of struts defining unit cells 450 within optimized design space 400. In some embodiments, the effective diameter of struts defining unit cells 450 and unit cells 492 can be in a range of greater or equal to 0.5 millimeters (mm) to less than or equal to 10 millimeters (mm).

In some embodiments, the thickness of ribbons defining the secondary unit cells 492 can be at least 10% less than the thickness of ribbons defining unit cells 450 within optimized design space 400. In some embodiments, the thickness of ribbons defining the secondary unit cells 492 can be at least 25% less than the thickness of ribbons defining unit cells 450 within optimized design space 400. In some embodiments, the thickness of ribbons defining the secondary unit cells 492 can be at least 50% less than the thickness of ribbons defining unit cells 450 within optimized design space 400. In some embodiments, the thickness of ribbons defining unit cells 450 and unit cells 492 can be in a range of greater or equal to 0.5 millimeters (mm) to less than or equal to 10 millimeters (mm).

In some embodiments, secondary unit cells 492 can comprise "soft unit cells" and unit cells 450 within optimized design space 400 can comprise "stiff unit cells." As used herein, a "soft unit cell" is a unit cell for a first lattice structure having: (i) a modeled compressive modulus that is less than a modeled compressive modulus of a second lattice structure for "stiff unit cell," (ii) a modeled shear modulus that is less than a modeled shear modulus of the second lattice structure for "stiff unit cell," or (iii) both. Similarly, a "stiff unit cell" is a unit cell for a second lattice structure having (i) a modeled compressive modulus that is greater than a modeled compressive modulus of a first lattice structure for a "soft unit cell," (ii) a modeled shear modulus that is greater than a modeled shear modulus of the first lattice structure for a "soft unit cell," or (iii) both. Soft unit cells have a first base geometry and stiff unit cells have a second base geometry different from the first base geometry. Exemplary lattice structures for soft and stiff unit cells include, but are not limited to, those described in U.S. Publication No. 2022/0110406, published on April 14, 2022, which is hereby incorporated by reference in its entirety.

In some embodiments, the first lattice structure for soft unit cells can have a first modeled compressive modulus and the second lattice structure for stiff unit cells can have a second modeled compressive modulus at least 15% greater than the first modeled compressive modulus. In some embodiments, the first lattice structure for soft unit cells can have a first modeled compressive modulus and the second lattice structure for stiff unit cells can have a second modeled compressive modulus greater than the first modeled compressive modulus by 15% to 500%, including subranges. For example, the second lattice structure can have a second modeled compressive modulus that is 15% to 500% greater than the first modeled compressive modulus, 15% to 400% greater than the first modeled compressive modulus, 15% to 200% greater than the first modeled compressive modulus, 15% to 100% greater than the first modeled compressive modulus, 100% to 500% greater than the first modeled compressive modulus, or 200% to 500% greater than the first modeled compressive modulus, or within a range having any two of these values as endpoints.

In some embodiments, the first lattice structure for soft unit cells can have a first modeled shear modulus and the second lattice structure for stiff unit cells can have a second modeled shear modulus at least 15% greater than the first modeled shear modulus. In some embodiments, the first lattice structure for soft unit cells can have a first modeled shear modulus and the second lattice structure for stiff sub-cells can have a second modeled shear modulus greater than the first modeled shear modulus by 15% to 500%, including subranges. For example, the second lattice structure can have a second modeled shear modulus that is 15% to 500% greater than the first modeled shear modulus, 15% to 400% greater than the first modeled shear modulus, 15% to 200% greater than the first modeled shear modulus, 15% to 100% greater than the first modeled shear modulus, 100% to 500% greater than the first modeled shear modulus, or 200% to 500% greater than the first modeled shear modulus, or within a range having any two of these values as endpoints.

As used herein, a "modeled compressive modulus" and a "modeled shear modulus" for a lattice structure are determined using the following model. A beam model simulation of a unit cell puck is modeled using FEA modeling software. Suitable FEA modeling software includes Abaqus FEA modeling software. For model efficiency purposes, a unit cell puck as small as a 3 x 3 x 1 unit cell puck can be used. A 3 x 3 x 1 unit cell puck includes one layer of 3 longitudinal rows of 3 unit cells arranged and adjacent to each other in the transverse direction as described herein. Other unit cell puck sizes can be used as long as the same size is used when comparing a modeled compressive modulus or a modeled shear modulus for two or more lattice structures. The unit cell puck is modeled as being sandwiched between and in contact with a top plate and a bottom plate. The following parameters were input into the FEA modeling software for the simulation: (1) material characteristics of the modeled struts for the unit cell puck (including density and elastic material properties), (2) the loading conditions, and (3) the contact mechanics between the unit cell puck and the two plates (including the frictional properties).

To determine a "modeled compressive modulus," a uniaxial compression load is applied by compressing the puck up to 50% strain using the top plate and capturing the resulting stress-strain curve. The modeled compressive modulus is calculated by measuring the slope of the stress-strain curve in the elastic deformation region.

To determine a "modeled shear modulus" the top plate is compressed with a 45-degree angle from the horizontal plane and the resulting stress-strain curve is captured. The modeled shear modulus is calculated by measuring the slope of the stress-strain curve in the elastic deformation region.

In embodiments comprising soft unit cells in non-topology optimized space 420 and stiff unit cells in optimized design space 400, a transition region 422 can be located a peripheral boundary 412. In such embodiments, transition region 422 can comprise a compound lattice that blends the first lattice structure for soft unit cells and the second lattice structure for stiff unit cells together.

Changing a material type for the secondary unit cells 492 within non-topology optimized space 420 can comprise selecting a material for unit cells 492 that comprises a lower compressive strength than the material for unit cells 450 within optimized design space 400. In some embodiments, a first material defining unit cells 492 can have a compressive strength at least 10% less than the compressive strength of a second material defining unit cells 450. In some embodiments, a first material defining unit cells 492 can have a compressive strength at least 25% less than the compressive strength of a second material defining unit cells 450. In some embodiments, a first material defining unit cells 492 can have a compressive strength at least 50% less than the compressive strength of a second material defining unit cells 450.

In some embodiments, method 100 can comprise determining target mechanical properties for different regions of optimized design space 400. In such embodiments, method 100 can comprise populating a plurality of interconnected unit cells 450 within the optimized design space 400 based on the target mechanical properties, selectively modifying a subset of a plurality of interconnected unit cells 450 populated within the optimized design space 400 based on the target mechanical properties, or both. In some embodiments, the step of determining target mechanical properties for different regions of optimized design space 400 can be performed as part of step 130.

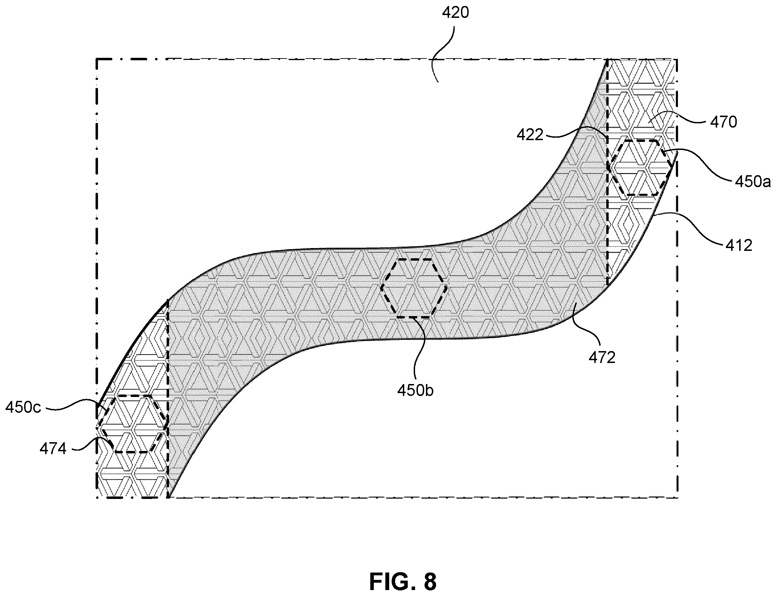

FIG. 8 illustrates a topology optimized and populated space 400 comprising multiple regions (a first region 470, a second region 472, and a third region 474) comprising unit cells 450 populated or modified based on target mechanical properties according to some embodiments.

In some embodiments, populating unit cells 450 in different regions 470, 472, 474, can comprise populating a subset of unit cells 450 in each respective region 470, 472, 474, with each subset comprising unit cells 450 comprising a strut thickness of struts defining the subset of interconnected unit cells, a ribbon thickness of ribbons defining the subset of interconnected unit cells, a material type for the subset of interconnected unit cells, and/or a unit cell type for the subset of interconnected unit cells. For example, first region 470 can comprise a first subset of unit cells 450a comprising one or more of: a first strut thickness, a first ribbon thickness, a first material type, or a first unit cell type. Second region 472 can comprise a second subset of unit cells 450b comprising one of more of: a second strut thickness different from the first strut thickness, a second ribbon thickness different from the first ribbon thickness, a second material type different from the first material type, or a second unit cell type different from the first unit cell type. In embodiments comprising a third region 474, third region 474 can comprise a third subset of unit cells 450c comprising one or more of: a third strut thickness different from the first strut thickness and the second strut thickness, a third ribbon thickness different from the first ribbon thickness and the second ribbon thickness, a third material type different from the first material type and the second material type, or a third unit cell type different from the first unit cell type and the second unit cell type.

In some embodiments, selectively modifying a subset of the plurality of interconnected unit cells 450 populated within the optimized design space 400 based on the target mechanical properties can comprise at least one of: reducing a strut thickness of struts defining the subset of interconnected unit cells, reducing a ribbon thickness of ribbons defining the subset of interconnected unit cells, changing a material type of the select interconnected unit cells, or changing a unit cell type for the subset of interconnected unit cells. In some embodiments, modifying unit cells 450 in different regions 470, 472, 474, can comprise modifying a subset of unit cells 450 in each respective region 470, 472, 474, with each modified subset comprising unit cells 450 comprising a strut thickness of struts defining the subset of interconnected unit cells, a ribbon thickness of ribbons defining the subset of interconnected unit cells, a material type for the subset of interconnected unit cells, and/or a unit cell type for the subset of interconnected unit cells.

For example, first region 470 can comprise a first subset of unit cells 450a comprising one or more of: a first strut thickness, a first ribbon thickness, a first material type, or a first unit cell type. Second region 472 can comprise a second subset of unit cells 450b modified to comprise one of more of: a second strut thickness different from the first strut thickness, a second ribbon thickness different from the first ribbon thickness, a second material type different from the first material type, or a second unit cell type different from the first unit cell type. In embodiments comprising a third region 474, third region 474 can comprise a third subset of unit cells 450c modified to comprise one or more of: a third strut thickness different from the first strut thickness and the second strut thickness, a third ribbon thickness different from the first ribbon thickness and the second ribbon thickness, a third material type different from the first material type and the second material type, or a third unit cell type different from the first unit cell type and the second unit cell type.

Populating or modifying a subset of unit cells 450 to comprise a certain strut thickness can comprise selecting an effective diameter of struts defining the subset of unit cells 450 within a region (for example, region 470, region 472, or region 474). In some embodiments, the effective diameter of struts defining a subset of unit cells 450 in a first region (for example, region 470) can be at least 10% less than or at least 10% greater than the effective diameter of struts defining a subset of unit cells 450 in another region (for example, region 472 or region 474). In some embodiments, the effective diameter of struts defining a subset of unit cells 450 in a first region (for example, region 470) can be at least 25% less than or at least 25% greater than the effective diameter of struts defining a subset of unit cells 450 in another region (for example, region 472 or region 474). In some embodiments, the effective diameter of struts defining a subset of unit cells 450 in a first region (for example, region 470) can be at least 50% less than or at least 50% greater than the effective diameter of struts defining a subset of unit cells 450 in another region (for example, region 472 or region 474).

Populating or modifying a subset of unit cells 450 to comprise a certain ribbon thickness can comprise selecting a thickness of ribbons defining the subset of unit cells 450 within a region (for example, region 470, region 472, or region 474). In some embodiments, the thickness of ribbons defining a subset of unit cells 450 in a first region (for example, region 470) can be at least 10% less than or at least 10% greater than the thickness of ribbons defining a subset of unit cells 450 in another region (for example, region 472 or region 474). In some embodiments, the thickness of ribbons defining a subset of unit cells 450 in a first region (for example, region 470) can be at least 25% less than or at least 25% greater than the thickness of ribbons defining a subset of unit cells 450 in another region (for example, region 472 or region 474). In some embodiments, the thickness of ribbons defining a subset of unit cells 450 in a first region (for example, region 470) can be at least 50% less than or at least 50% greater than the thickness of ribbons defining a subset of unit cells 450 in another region (for example, region 472 or region 474).

Populating or modifying a subset of unit cells 450 to comprise a certain unit cell type can comprise selecting a unit cell type defining the subset of unit cells 450 within a region (for example, region 470, region 472, or region 474). In some embodiments, a unit cell type defining the subset of unit cells 450 in a first region (for example, region 470) can be "soft unit cells" and a unit cell type defining the subset of unit cells 450 in a second region (for example, region 472 or region 474) can be "stiff unit cells." In some embodiments, a unit cell type defining the subset of unit cells 450 in a first region (for example, region 470) can a have a first base geometry and a unit cell type defining the subset of unit cells 450 in a second region (for example, region 472 or region 474) can have a second base geometry different from the first base geometry.

In embodiments comprising soft unit cells in a first region and stiff unit cells in a second region, a transition region 422 can be located at a boundary between the first region and the second region. In such embodiments, transition region 422 can comprise a compound lattice that blends the first lattice structure for soft unit cells and the second lattice structure for stiff unit cells together.

Populating or modifying a subset of unit cells 450 to comprise a certain material type can comprise selecting a material type comprising a higher or lower compressive strength. For example, in some embodiments, a first material defining a subset of unit cells 450 in a first region (for example, region 470) can have a compressive strength at least 10% less than or at least 10% greater than the compressive strength of a second material type defining a subset of unit cells 450 in another region (for example, region 472 or region 474). In some embodiments, a first material defining a subset of unit cells 450 in a first region (for example, region 470) can have a compressive strength at least 25% less than or at least 25% greater than the compressive strength of a second material type defining a subset of unit cells 450 in another region (for example, region 472 or region 474). In some embodiments, a first material defining a subset of unit cells 450 in a first region (for example, region 470) can have a compressive strength at least 50% less than or at least 50% greater than the compressive strength of a second material type defining a subset of unit cells 450 in another region (for example, region 472 or region 474).

In some embodiments, the target mechanical properties of different regions can be determined based on a property map 1100. In some embodiments, the property map can be for design space 200. In some embodiments, the property map 1100 can be for topology optimized design space 300.

In some embodiments, the property map 1100 can be a map of strains (which can be referred to as a "strain map"). In some embodiments, the property map 1100 can be a map of stresses (which can be referred to as a "stress map"). In some embodiments, the property map 1100 can be a map of deformations (which can be referred to as a "deformation map"). In such embodiments, the deformations mapped can be translational deformations of the structure, rotational deformations of the structure, or both.

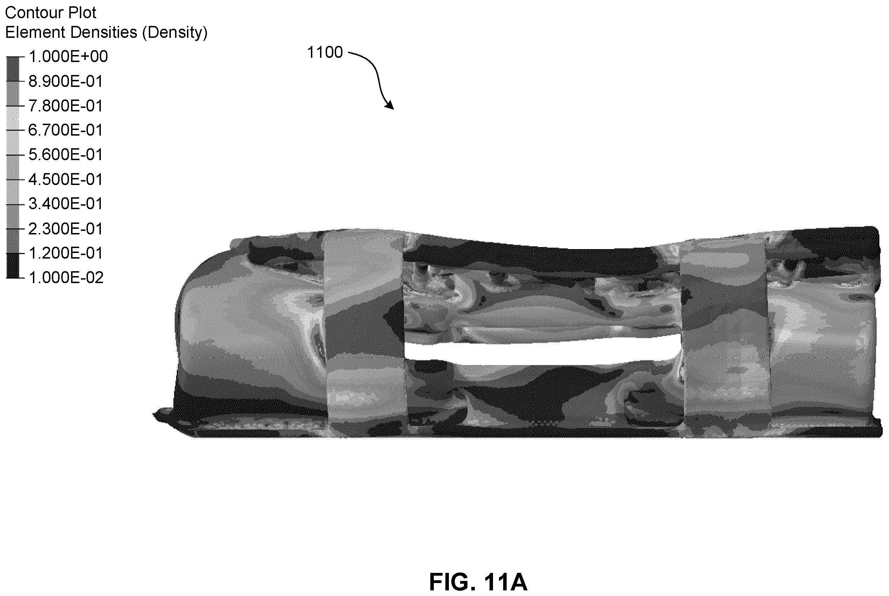

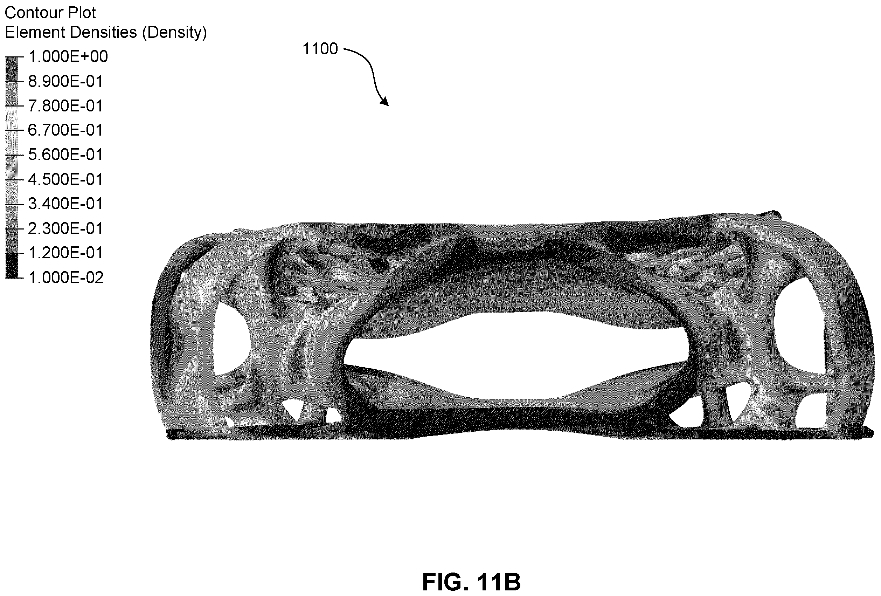

FIGS. 11A and 11B show a property map 1100 according to some embodiments. Map 1100 can be created by modeling boundary conditions and iteratively applying a simulation of conditions to be optimized on design space 200 or optimized design space 300. In such embodiments, a first set of conditions can be applied and then a second set of conditions is applied. If the topology performs better or worse under the second conditions, the map 1100 is modified accordingly, and additional sets of boundary conditions are applied until a suitable map 1100 is produced.

In some embodiments, the degree of a property (for example, strain, stress, or deformation) in different regions in map 1100 can be related by density values assigned to different regions. For example, a high density value of "1" can be assigned to the highest strain, stress, or deformation region(s), a low density value of "0" can be assigned to the lowest strain, stress, or deformation region(s), and values between "1" and "0" can be assigned to other regions accordingly. Map 1100 can be created using finite element analysis (FEA) software. Suitable FEA modeling software includes Abaqus FEA modeling software and ALTAIR^{®} OPTISTRUCT^{®} modeling software.

In embodiments comprising map 1100, different density values (or different density value ranges) can determine the location of different regions (for example, first region 470, second region 472, and third region 474) comprising subsets of unit cells 450 populated or modified based on the target mechanical properties. As a non-limiting example, a first region 470 can correspond to locations on map 1100 having a density value ranging from 0.67 to 1, a second region 472 can correspond to locations on map 1100 having a density value from 0.34 to 0.66, and a third region 474 can correspond to locations on map 1100 having a density value from 0 to 0.33. It should be understood that any number of density values or density value ranges can be assigned to any number of different regions within a topology optimized design space 300, and thereof populated optimized design space 400.

In some embodiments, the target mechanical properties can comprise a compressive strength for different regions of optimized design space 400. For example, a first region (for example, region 470) can have a first target compressive strength at least 10% less than or at least 10% greater than a second target compressive strength of a second region (for example, region 472 or region 474).

In some embodiments, the target mechanical properties can comprise a shear strength for different regions of optimized design space 400. For example, a first region (for example, region 470) can have a first target shear strength at least 10% less than or at least 10% greater than a second target shear strength of a second region (for example, region 472 or region 474).

In some embodiments, the target mechanical properties can comprise a tensile strength for different regions of optimized design space 400. For example, a first region (for example, region 470) can have a first target tensile strength at least 10% less than or at least 10% greater than a second target tensile strength of a second region (for example, region 472 or region 474).

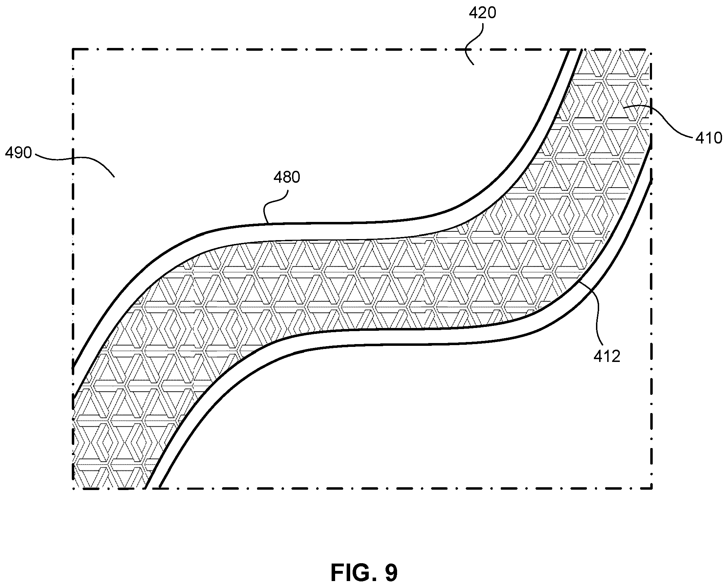

In some embodiments, method 100 can comprise populating a skin 480 between void space 490 and unit cells 450 located at peripheral boundary 412, as shown for example in FIG. 9. In such embodiments, skin 480 can cover all or a portion of the unit cells 450 located peripheral boundary 412. Skin 480 comprises a thin layer of material devoid of unit cells. In some embodiments, populating skin 480 can be performed as part of step 120. In some embodiments, populating skin 480 can be performed as part of step 130.

After performing topology optimization and populating in steps 120 and 130, a component comprising the plurality of interconnected unit cells in the lattice structure is 3D printed in step 140. Printing in step 140 prints the topology optimized design space into a physical component comprising (i) a topology optimized volume with topology optimized structures comprising printed unit cells and corresponding to topology optimized structures 410 and (ii) a non-topology optimized volume corresponding to non-topology optimized space 420.

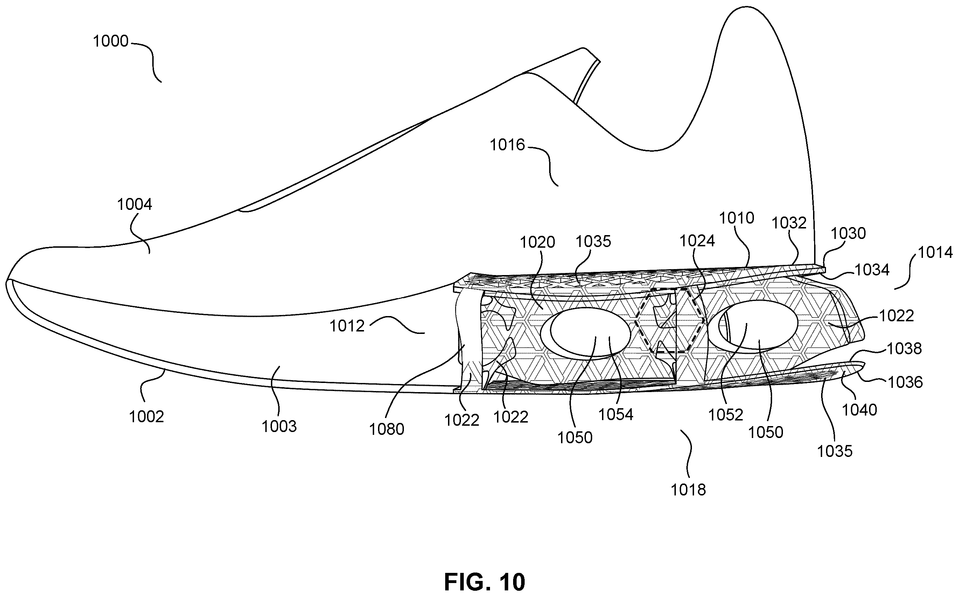

For example, FIG. 10 shows an article of footwear 1000 comprising an upper 1004 and a sole 1002 comprising a 3D printed footwear component 1010 comprising (i) a topology optimized volume 1020 with topology optimized structures 1022 comprising unit cells 1024 and (ii) a non-topology optimized volume 1050 according to some embodiments. Footwear component 1010 can comprise a forward end 1012, a rearward end 1014, a medial side 1016, and a lateral side 1018. In some embodiments, the 3D printed component printed in step 140 can be 3D printed as a single piece.

Unit cells 1024 of the 3D printed component printed in step 140 (for example, component 1010) correspond to unit cells 450 populated within a populated optimized design space 400 as described herein. Unit cells 1024 can comprise unit cells printed based on unit cells 450 and/or unit cells 460. Similarly, non-topology optimized volume 1050 of the 3D printed component printed in step 140 (for example, component 1010) corresponds to non-topology optimized space 420 as described herein. In some embodiments, non-topology optimized volume 1050 can comprise unit cells printed based on secondary unit cells 492 as described herein.

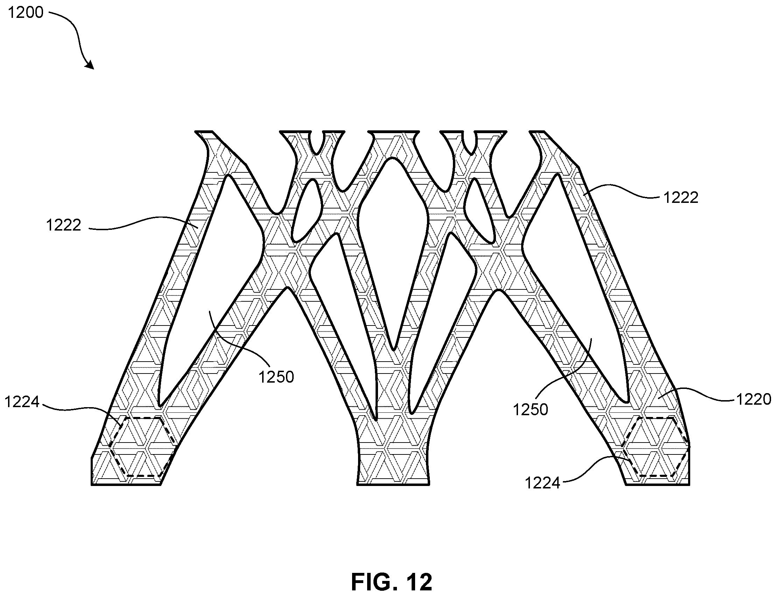

As another example, FIG. 12 shows a 3D printed footwear component 1200 in the form of a portion of an upper for an article of footwear according to some embodiments. Component 1200 comprises (i) a topology optimized volume 1220 with topology optimized structures 1222 comprising unit cells 1224 and (ii) a non-topology optimized volume 1250. Unit cells 1224 of the 3D printed component 1200 correspond to unit cells 450 populated within a populated optimized design space as described herein. Unit cells 1224 can comprise unit cells printed based on unit cells 450 and/or unit cells 460. Similarly, non-topology optimized volume 1250 of the 3D printed component 1200 corresponds to non-topology optimized space as described herein. In some embodiments, non-topology optimized volume 1250 can comprise unit cells printed based on secondary unit cells 492 as described herein.

In some embodiments, footwear component 1200 can be a lace support, a cage (for example, midfoot cage or a toe cage), a heel counter, a strap, a sleeve, or a tongue for an upper of an article of footwear.

In some embodiments, step 140 can comprise printing a skin (for example skin 1080) around all or a portion of the optimized design space 400 such that the skin covers interconnected unit cells in the printed topology optimized volume 1020 or volume 1220 as described herein. In such embodiments, the skin 1080 can be a solid skin devoid of interconnected unit cells.

Additive manufacturing techniques for three-dimensional (3D) printing a component in step 140 include for example, selective laser sintering, selective laser melting, selective heat sintering, stereo lithography, fused deposition modeling, or 3-D printing in general. Various additive manufacturing techniques related to articles of footwear are described for example in US 2009/0126225, WO 2010/126708, US 2014/0300676, US 2014/0300675, US 2014/0299009, US 2014/0026773, US 2014/0029030, WO 2014/008331, WO 2014/015037, US 2014/0020191, EP 2564719, EP 2424398, and US 2012/0117825. In some embodiments, the additive manufacturing process can include a continuous liquid interface production process. For example, the additive manufacturing process can include a continuous liquid interface production process as described in U.S. Pat. No. 9,453,142, issued on September 27, 2016, which is hereby incorporated in its entirety by reference thereto.

In some embodiments, 3-D printing a component can comprise 3-D printing the component in an intermediate green state, shaping the component in the green state, and curing the green state in its final shape. In some embodiments, 3-D printing a component can comprise 3-D printing the component in an intermediate green state, expanding the intermediate green state, shaping the component in the green state, and curing the green state in its final shape.

Techniques for producing an intermediate green state object from resins by additive manufacturing are known. Suitable techniques include bottom-up and top-down additive manufacturing, generally known as stereolithography. Such methods are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al. The disclosures of these patents and applications are incorporated by reference herein in their entirety.

In some embodiments, the additive manufacturing step can be carried out by one of the family of methods sometimes referred to as continuous liquid interface production (CLIP). CLIP is known and described in, for example, US Patent Nos. 9,211,678; 9,205,601; 9,216,546; and others; in J. Tumbleston et al., Continuous liquid interface production of 3D Objects, Science 347, 1349-1352 (2015); and in R. Janusziewcz et al., Layerless fabrication with continuous liquid interface production, Proc. Natl. Acad. Sci. USA 113, 11703-11708 (October 18, 2016). Other examples of methods and apparatus for carrying out particular embodiments of CLIP include, but are not limited to: Batchelder et al., US Patent Application Pub. No. US 2017/0129169 (May 11, 2017); Sun and Lichkus, US Patent Application Pub. No. US 2016/0288376 (Oct. 6, 2016); Willis et al., US Patent Application Pub. No. US 2015/0360419 (Dec. 17, 2015); Lin et al., US Patent Application Pub. No. US 2015/0331402 (Nov. 19, 2015); D. Castanon, US Patent Application Pub. No. US 2017/0129167 (May 11, 2017). B. Feller, US Pat App. Pub. No. US 2018/0243976 (published Aug 30, 2018); M. Panzer and J. Tumbleston, US Pat App Pub. No. US 2018/0126630 (published May 10, 2018); K. Willis and B. Adzima, US Pat App Pub. No. US 2018/0290374 (Oct. 11, 2018) L. Robeson et al., PCT Patent Pub. No. WO 2015/164234 (see also US Patent Nos. 10,259,171 and 10,434,706); and C. Mirkin et al., PCT Patent Pub. No. WO 2017/210298 (see also US Pat. App. US 2019/0160733). The disclosures of these patents and applications are incorporated by reference herein in their entirety.

While stereolithography techniques such as CLIP can be preferred, it will be appreciated that other additive manufacturing techniques, such as jet printing (see, e.g., US Patent No. 6,259,962 to Gothait and US Patent App. Serial No. US 2020/0156308 to Ramos et al.) can also be used.

Exemplary materials for 3-D printed components described herein include, but at not limited to, a foam, a rubber, ethyl vinyl acetate (EVA), a thermoplastic elastomer, a polyurethane, a thermoplastic polyurethane (TPU), an elastomeric polyurethane, an expanded thermoplastic polyurethane (eTPU), an expanded elastomeric polyurethane, a polyether block amide (PEBA), an expanded polyether block amide (ePEBA), a thermoplastic rubber (TPR), and a polyolefin, for example polyethylene (PE), polystyrene (PS), or polypropylene (PP), polyamides (nylon), or a combination of any of these materials, or a foam comprising one or more of these materials. Additional materials include carbon and carbon allotropes, such as graphene, carbon nanotubes, and carbon fibers, fiber reinforced polymers, biological materials such as Mycelium, and metals, such as aluminum, steel, or titanium, among others and combinations thereof.

As described herein, populated and optimized design space 400 can comprise a plurality of topology optimized structures 410. In some embodiments, the topology optimized structures 410 can be in the form of ribbons or beams. In some embodiments, the topology optimized structures 410 can extend from a top plate 430 to a bottom plate 436 located at an opposite side of optimized design space 400. In some embodiments, a top surface 432 of top plate 430 can define an upper-facing surface of populated optimized design space 400 and a bottom surface 440 of bottom plate 436 can define a ground-facing surface of populated optimized design space 400. In some embodiments, top plate 430 can comprise a plurality of apertures 435 extending through top plate 430 from top surface 432 to a bottom surface 434 of top plate 430. In some embodiments, bottom plate 436 can comprise a plurality of apertures 435 extending through bottom plate 436 from bottom surface 440 to a top surface 438 of bottom plate 436.

When printed in step 140, the topology optimized structures 410 of populated optimized design space become topology optimized structures 1022 comprising interconnected unit cells 1024 for topology optimized volume 1020 for physical component. Interconnected unit cells 1024 can comprise unit cells printed based on unit cells 450 and/or unit cells 460. For example, in some embodiments, the topology optimized structures 1022 can extend from a top plate 1030 to a bottom plate 1040 located at an opposite side of footwear component 1010 as shown in FIG. 10. In some embodiments, a top surface 1032 of top plate 1030 can define an upper-facing surface of footwear component 1010 and a bottom surface 1040 of bottom plate 1036 can define a ground-facing surface of footwear component 1010. In some embodiments, top plate 1030 can comprise a plurality of apertures 1035 extending through top plate 1030 from top surface 1032 to a bottom surface 1034 of top plate 1030. In some embodiments, bottom plate 1036 can comprise a plurality of apertures 1035 extending through bottom plate 1036 from bottom surface 1040 to a top surface 1038 of bottom plate 1036.

In some embodiments, the non-topology optimized volume 1050 around the topology optimized structures 1022 can comprise void space 1052 that is devoid of unit cells 1024. In some embodiments, the void space 1052 can comprise one or more through channels 1054 extending from medial side 1016 of footwear component 1010 to lateral side 1018 of footwear component 1010. In some embodiments, the one or more through channels 1054 can comprise an effective diameter larger than an effective diameter of interconnected unit cells 1024.

In some embodiments, in terms of total volume, footwear component 1010 can comprise at least 50% void space 1052. In some embodiments, in terms of total volume, footwear component 1010 can comprise at least 60% void space 1052. In some embodiments, in terms of total volume, footwear component 1010 can comprise 50% to 80% void space 1052. In some embodiments, in terms of total volume, footwear component 1010 can comprise 60% to 80% void space 1052.

Sole 1002 can comprise one or more of an insole, a midsole, and an outsole. Sole 1002 can also comprise one or more portions. At least one portion of sole 1002 comprises a footwear component 1010 as described herein. In some embodiments, multiple portions of sole 1002 can comprise a footwear component 1010 as described herein. In some embodiments, at least one portion of sole 1002 can comprise a solid region 1003 devoid of a lattice structure. In such embodiments, solid region 1003 can be formed by molding. Also in such embodiments, footwear component 1010 and solid region 1003 can be mechanically bound to each other via, for example, an adhesive, heat bonding, or co-molding.

While various embodiments have been discussed herein in the context of footwear, other articles of sports equipment may be manufactured using the methods discussed herein. Other articles of sports equipment include, but are not limited to, shin guards, protective pads (for example, football, lacrosse, or hockey pads), helmets, bodysuits, shirts, tights, gloves, compression sleeves, and balls.

Where a range of numerical values comprising upper and lower values is recited herein, unless otherwise stated in specific circumstances, the range is intended to include the endpoints thereof, and all integers and fractions within the range. It is not intended that the disclosure or claims be limited to the specific values recited when defining a range. Further, when an amount, concentration, or other value or parameter is given as a range, one or more ranges, or as list of upper values and lower values, this is to be understood as specifically disclosing all ranges formed from any pair of any upper range limit or value and any lower range limit or value, regardless of whether such pairs are separately disclosed.

The foregoing description of the specific embodiments will so fully reveal the general nature of the invention(s) that others can, by applying knowledge within the skill of the art, readily modify and/or adapt for various applications such specific embodiments, without undue experimentation, without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention(s) should not be limited by any of the above-described exemplary embodiments, but should be defined only in accordance with the following claims and their equivalents.

### FURTHER EMBODIMENTS

Embodiment 1. A method for making a footwear component, the method comprising:
   selecting a design space;
   performing topology optimization on the design space to create an optimized design space;
   populating the design space or the optimized design space with a plurality of interconnected unit cells in a lattice structure; and
   3D printing the footwear component comprising the plurality of interconnected unit cells in the lattice structure.
Embodiment 2. The method of Embodiment 1, wherein the step of preforming topology optimization is performed before the step of populating the design space with the plurality of interconnected unit cells, and
   wherein populating the design space comprises populating the plurality of interconnected unit cells within the optimized design space.
Embodiment 3. The method of Embodiment 1 or 2, wherein the step of preforming topology optimization is performed after the step of populating the design space with the plurality of interconnected unit cells, and
   wherein the optimized design space is created by removing select interconnected unit cells in regions surrounding the optimized design space.
Embodiment 4. The method of one of Embodiments 1 to 3, wherein the step of preforming topology optimization is performed after the step of populating the design space with the plurality of interconnected unit cells, and
   wherein the optimized design space is created by modifying select interconnected unit cells in regions surrounding the optimized design space.
Embodiment 5. The method of Embodiment 4, wherein modifying select interconnected unit cells comprises at least one of: reducing a strut thickness of struts defining the select interconnected unit cells, reducing a ribbon thickness of ribbons defining the select interconnected unit cells, changing a material type of the select interconnected unit cells, or changing a unit cell type for the select interconnected unit cells.
Embodiment 6. The method of one of Embodiments 1 to 5, wherein the step of performing topology optimization comprises modeling a set of boundary conditions applied to the design space, and wherein the set of boundary conditions comprises a set of boundary forces applied to the design space or a set of boundary displacements applied to the design space.
Embodiment 7. The method of Embodiment 6, wherein the set of boundary conditions comprises a set of boundary conditions for all or a portion of a footwear sole during a gait cycle of an individual or group of individuals.
Embodiment 8. The method of one of Embodiments 1 to 7, comprising:
   determining target mechanical properties for different regions of the optimized design space, and
   populating the plurality of interconnected unit cells based on the target mechanical properties.
Embodiment 9. The method of one of Embodiments 1 to 8, comprising:
   determining target mechanical properties for different regions of the optimized design space, and
   selectively modifying a subset of the plurality of interconnected unit cells populated within the optimized design space based on the target mechanical properties.
Embodiment 10. The method of Embodiment 9, wherein selectively modifying the subset of the plurality of interconnected unit cells populated within the optimized design space comprises at least one of: reducing a strut thickness of struts defining the subset of interconnected unit cells, reducing a ribbon thickness of ribbons defining the subset of interconnected unit cells, changing a material type of the select interconnected unit cells, or changing a unit cell type for the subset of interconnected unit cells.
Embodiment 11. The method of one of Embodiments 1 to 10, wherein 3D printing the footwear component comprises printing a skin around the optimized design space such that the skin covers the plurality of interconnected unit cells in the optimized design space.
Embodiment 12. The method of Embodiment 11, wherein the skin does not comprise interconnected unit cells.
Embodiment 13. The method of one of Embodiments 1 to 12, wherein the footwear component comprises a component of a sole for an article of footwear.
Embodiment 14. The method of one of Embodiments 1 to 13, wherein the footwear component comprises a heel portion of a sole for an article of footwear.
Embodiment 15. The method of one of Embodiments 1 to 14, wherein the step of performing topology optimization comprises modeling a set of boundary conditions applied to the design space, and wherein the set of boundary conditions comprises a set of boundary conditions for a footwear upper during a gait cycle of an individual or group of individuals.
Embodiment 16. The method of Embodiment 15, wherein the footwear component comprises a portion of an upper for an article of footwear.
Embodiment 17. A footwear component, comprising:
   a structure defined by a topology optimized volume; and
   interconnected unit cells arranged in a lattice structure and populated within the topology optimized volume.
Embodiment 18. The footwear component of Embodiment 17, comprising void space occupying regions within the structure not defined by the topology optimized volume, wherein the void space is devoid of the interconnected unit cells.
Embodiment 19. The footwear component of Embodiment 18, wherein the structure comprises a plurality of interconnected support members, and wherein each support member comprises a plurality of the interconnected unit cells.
Embodiment 20. The footwear component of Embodiment 18 or 19, wherein the void space comprises a through channel extending from a medial side of the footwear component to a lateral side of the footwear component, and wherein the through channel comprises an effective diameter larger than an effective diameter of the interconnected unit cells arranged in the lattice structure.
Embodiment 21. The footwear component of one of Embodiments 17 to 20, wherein the footwear component comprises a 3D-printed sole component.

## Claims

1. A method for making a footwear component, the method comprising:
selecting a design space;
performing topology optimization on the design space to create an optimized design space;
populating the design space or the optimized design space with a plurality of interconnected unit cells in a lattice structure; and
3D printing the footwear component comprising the plurality of interconnected unit cells in the lattice structure.

2. The method according to claim 1, wherein the step of preforming topology optimization:
is performed before the step of populating the design space with the plurality of interconnected unit cells, and wherein populating the design space comprises populating the plurality of interconnected unit cells within the optimized design space; and/or
is performed after the step of populating the design space with the plurality of interconnected unit cells, and wherein the optimized design space is created by removing select interconnected unit cells in regions surrounding the optimized design space.

3. The method according to claim 1 or 2, wherein the step of preforming topology optimization is performed after the step of populating the design space with the plurality of interconnected unit cells, and wherein the optimized design space is created by modifying select interconnected unit cells in regions surrounding the optimized design space.

4. The method of claim 3, wherein modifying select interconnected unit cells comprises at least one of:
reducing a strut thickness of struts defining the select interconnected unit cells, reducing a ribbon thickness of ribbons defining the select interconnected unit cells, changing a material type of the select interconnected unit cells, or changing a unit cell type for the select interconnected unit cells.

5. The method according to one of claims 1 to 4, wherein the step of performing topology optimization comprises modeling a set of boundary conditions applied to the design space, and wherein the set of boundary conditions comprises a set of boundary forces applied to the design space or a set of boundary displacements applied to the design space;
preferably wherein the set of boundary conditions comprises a set of boundary conditions for all or a portion of a footwear sole during a gait cycle of an individual or group of individuals.

6. The method according to one of claims 1 to 5, comprising:
determining target mechanical properties for different regions of the optimized design space, and
populating the plurality of interconnected unit cells based on the target mechanical properties.

7. The method according to one of claims 1 to 6, comprising:
determining target mechanical properties for different regions of the optimized design space, and
selectively modifying a subset of the plurality of interconnected unit cells populated within the optimized design space based on the target mechanical properties.

8. The method of claim 7, wherein selectively modifying the subset of the plurality of interconnected unit cells populated within the optimized design space comprises at least one of:
reducing a strut thickness of struts defining the subset of interconnected unit cells, reducing a ribbon thickness of ribbons defining the subset of interconnected unit cells, changing a material type of the select interconnected unit cells, or changing a unit cell type for the subset of interconnected unit cells.

9. The method according to one of claims 1 to 8, wherein 3D printing the footwear component comprises printing a skin around the optimized design space such that the skin covers the plurality of interconnected unit cells in the optimized design space;
preferably wherein the skin does not comprise interconnected unit cells.

10. The method according to one of claims 1 to 9, wherein:
the footwear component comprises a component of a sole for an article of footwear; and/or
the footwear component comprises a heel portion of a sole for an article of footwear.

11. The method according to one of claims 1 to 10, wherein the step of performing topology optimization comprises modeling a set of boundary conditions applied to the design space, and wherein the set of boundary conditions comprises a set of boundary conditions for a footwear upper during a gait cycle of an individual or group of individuals; preferably wherein the footwear component comprises a portion of an upper for an article of footwear.

12. A footwear component, comprising:
a structure defined by a topology optimized volume; and
interconnected unit cells arranged in a lattice structure and populated within the topology optimized volume.

13. The footwear component of claim 12, comprising void space occupying regions within the structure not defined by the topology optimized volume, wherein the void space is devoid of the interconnected unit cells.

14. The footwear component of claim 13, wherein:
the structure comprises a plurality of interconnected support members,
and wherein each support member comprises a plurality of the interconnected unit cells; and/or
the void space comprises a through channel extending from a medial side of the footwear component to a lateral side of the footwear component, and wherein the through channel comprises an effective diameter larger than an effective diameter of the interconnected unit cells arranged in the lattice structure.

15. The footwear component according to one of claims 12 to 14, wherein the footwear component comprises a 3D-printed sole component.
